# EUROPEAN PATENT APPLICATION

(11) **EP 4 421 549 A2**
(43) Date of publication of application: **28.08.2024**
(21) Application number: 24178234.1
(22) Date of filing: 09.02.2023
(51) Int. Cl.: G02B 6/44

(54) **AERIAL DROP OPTICAL FIBRE CABLE**

(30) Priority: 09.02.2022 IN 202211006992
(62) Divisional of application: 23155776.0
(71) Applicant: Sterlite Technologies Limited, Gurugram, Haryana 122102 (IN)
(72) Inventor: Shukla, Vikash, 122102 Gurugram (IN); Singh, Kawarpreet, 122102 Gurugram (IN)
(74) Representative: Petraz, Gilberto Luigi

(57) **Abstract**

The present disclosure provides an optical fibre cable (100, 200) includes a sheath (106) surrounding one or more tubes (104) and one or more strength members (108) partially embedded in the sheath (106). Each of the one or more tubes (104) encloses at least one optical fiber (102) having a diameter of 200±20um. In particular, one or more tubes (104) has a tube length greater than a cable length. Moreover, the one or more tubes (104) has a young's modulus of less than or equal to 700 N and a lay-length of equal to or more than 400 mm. Further, the optical fiber cable (100, 200) breaks at a pre-defined load.

## Description

### TECHNICAL FIELD

Embodiments of the present disclosure relate to the field of optical fibers for optical fiber transmission systems and more particularly, relate to an aerial drop optical fibre cable.

This application claims the benefit of Indian Application No 202211006992 titled "AERIAL DROP OPTICAL FIBRE CABLE" filed by the applicant on Feb 09th 2022, which is incorporated herein by reference in its entirety.

### BACKGROUND ART

With the advent of new technologies and lower prices, the introduction of fiber optic installation in residential homes or "Fiber-To-The-Home" (FTTH) is coming closer to reality. In a passive optical network, small optical cables containing only a few fibers will be deployed directly onto customer premises for providing video, data and voice connections with superior quality and bandwidth. The optical cables need to be designed with appropriate materials so that long term fiber and cable reliability are obtained at a cost that is acceptable for the distribution market.

Conventional copper cables have limited data transmission bandwidth and are subject to electromagnetic interference. Conventional optical fiber cables are designed for different applications and thus, do not have the features which are required for FTTH applications such as compatibility with existing hardware, self-support over large distances, and low flammability.

To overcome the limitations of the copper cables, the laying of overhead cables has increased rapidly due to the advancement in optical networks. The overhead cables are laid to reduce load on pipeline resources and reduce cost of laying cables. The overhead cables include optical fiber cables used for aerial applications, thus known as aerial drop optical fiber cables. The aerial drop optical fiber cables are typically used for fiber to the home application. The aerial drop optical fiber cables are compact in structure and has a layer stranded structure.

The aerial drop optical fiber cables include multiple number of tubes with each tube having multiple number of optical fibers. In addition, the aerial drop optical fiber cables need to have a pre-defined break load in order to be installed aerially complying with the safety standards. So, a proper choice of cable components is very crucial for developing these cables. The tubes used in the conventional cables are made of materials such as Polypropylene and Polybutylene Terephthalate. However, these cables with tubes made of such materials may not meet the required breakload requirements.

Conventional aerial drop cables may be reinforced by metallic materials such as steel or copper, or non-conductive materials such as carbon fibers, aramid fibers, or glass reinforced epoxy rods. For example, U.S. Pat. No. 4,199,225 discloses an optical cable which utilizes a pair of steel or carbon fiber reinforcing wires disposed on opposite sides of a bore housing optical fibers in order to provide longitudinal support and protection against a crushing force applied to the optical cable. U.S. Pat. No. 4,199,225 discloses an optical cable which utilizes a pair of reinforcing members such as steel wire or carbon fiber disposed on opposite sides of a bore housing optical fibers in order to provide longitudinal support and protection against a crushing force applied to the optical cable.

CN113419319A discloses an aerial drop optical fiber cable having an optical fiber ribbon array surrounded by a water blocking layer and an outer jacket. Another prior art JP2004117867A discloses an optical fiber cable with optical fiber positioned inside a storage section and strength members embedded in the sheath. Yet another prior art CN111580233A discloses an optical fiber cable comprising a cable core and an outer sheath and is characterized in that the cable core is formed by twisting optical fiber bundles. However, CN113419319A and JP2004117867A discloses drop cables and the lay-length of fiber ribbons inside the core but not about the lay length of the tubes. However, CN111580233A does not talk about the lay length of the fibers and the tubes.

In light of the above-stated discussion, there is an urgent need for a technical solution that overcomes the above-stated limitations in the conventional optical fibre cable. The present disclosure focuses on an optical fibre cable for aerial application with optimized construction parameters and pre-defined break load.

### SUMMARY OF THE DISCLOSURE

Embodiments of the present disclosure provide an optical fiber cable comprising one or more tubes enclosing at least one optical fiber. In particular, the one or more tubes have a tube length greater than a cable length, a young's modulus of less than or equal to 700 N, and a lay-length of equal to or more than 400 mm. A sheath surrounding the one or more tubes and one or more strength members (at least partially embedded in the sheath.

According to the first aspect of the present disclosure, the one or more tubes (104) have an extra tube length (ETL) between 0.02% to 0.2%, wherein the extra tube length (ETL) = * 100.

According to the second aspect of the present disclosure, at least one optical fiber is a ribbon such that adjacent optical fibers in the ribbon are intermittently connected along length.

According to the third aspect of the present disclosure, the tube length is 0 to 2% longer than the cable length.

According to the fourth aspect of the present disclosure, the optical fiber has a macrobend loss of less than or equal to 0.75 dB/turn at 1550 nm when at least one optical fiber is bent around a mandrel of 10mm radius. The optical fiber (102) has a diameter of 200±20um.

According to the fifth aspect of the present disclosure, the optical fiber comprising a water blocking gel in one or more tubes .

According to the sixth aspect of the present disclosure, the optical fiber (has a fiber length 2% greater than the cable length.

According to another embodiment of the present disclosure, an optical fiber cable comprises one or more tubes enclosing at least one optical fiber with a diameter of 200±20um, a sheath surrounding the one or more tubes and one or more strength members embedded in the sheath. The optical fiber has a macrobend loss of less than or equal to 0.75 dB/turn at 1550 nm when the at least one optical fiber is bent around a mandrel of 10mm radius, and the optical fiber cable breaks at a pre-defined load.

According to the seventh aspect of the present disclosure, the number optical fibers in the optical fiber cable is greater than or equal to 72.

According to the eighth aspect of the present disclosure, each of the one or more strength members is stranded metallic wires.

According to the ninth aspect of the present disclosure, the one or more tubes have a young's modulus of less than or equal to 700N and a lay-length of equal to or more than 400 mm.

The foregoing solutions of the present disclosure are attained by providing a multi-core optical fiber.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating an optical fibre cable for aerial applications in accordance with one embodiment of the present disclosure; and
Fig. 2 is a pictorial snapshot illustrating an optical fibre cable for aerial applications in accordance with another embodiment of the present disclosure.

### REFERENCE LIST

Optical fiber cable 100/ 200
One or more tubes 104
Optical fiber 102
Sheath 106
One or more strength members 108

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

Optical fiber refers to a medium associated with transmission of information over long distances in the form of light pulses. The optical fiber uses light to transmit voice and data communications over long distances when encapsulated in a jacket/sheat

ITU.T, stands for International Telecommunication Union-Telecommunication Standardization Sector, is one of the three sectors of the ITU. The ITU is the United Nations specialized agency in the field of telecommunications and is responsible for studying technical, operating and tariff questions and issuing recommendations on them with a view to standardizing telecommunications on a worldwide basis.

Lay length is a longitudinal distance along the length of the optical fiber cable required for the one or more tubes to go all the way around each other.

Young's modulus (E) is a property of the material that tells how easily it can stretch and deform. The young's modulus (E) is defined as a ratio of tensile stress (a) to tensile strain (ε), where stress is the amount of force applied per unit area (a = F/A) and strain is extension per unit length (ε = dI/I)

Medium density polyethylene is a thermoplastic material produced by chromium/silica catalysts, Ziegler-Natta catalysts or metallocene catalysts

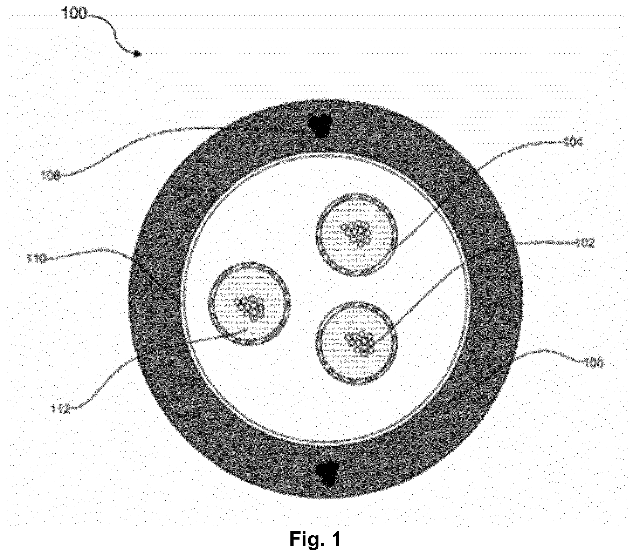

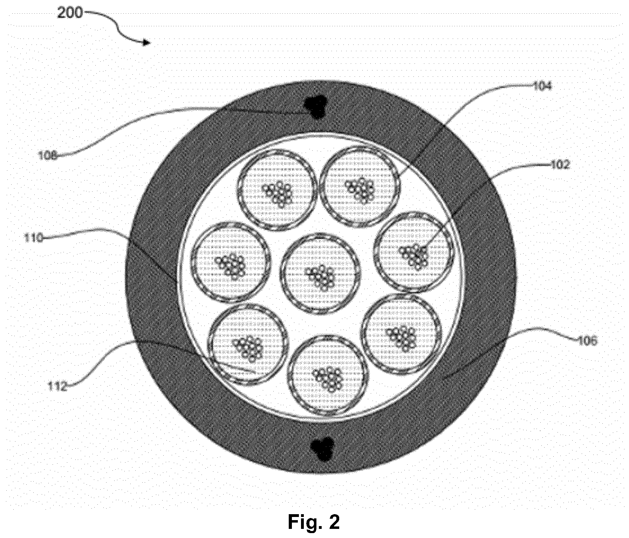

Fig. 1 and Fig. 2 are pictorial snapshots illustrating optical fibre (100/200) cables for aerial applications in accordance with one or more embodiments of the present disclosure. The optical fiber cable 100 is used for telecommunication applications and networking applications and can be installed aerially for fiber to the home applications (FTTH). In particular, the optical fiber cable 100 adopts a layer stranded optical cable structure which includes optical fibers enclosed inside loose tubes and a water absorbing or blocking compound filled inside the loose tubes.

The optical fiber cable 100 is a work safe optical fiber cable with a predefined breaking load. In particular, the predefined breaking load is necessary in order for the optical fiber cable 100 to be installed aerially and comply with safety standards. Further, the optical fiber cable 100 includes elements which have properties different from elements made of conventional materials. The properties of the elements of the optical fiber cable 100 are changed in order for the optical fiber cable 100 to be installed aerially and possess the pre-defined breaking load.

The optical fiber cable 100 has a reduced diameter suitable for aerial drop applications. In addition, the optical fiber cable 100 has low optical attenuation. Further, the optical fiber cable 100 has low Young's modulus of tubes which enables easy installation. The optical fibre cable 100 includes one or more tubes 104, a sheath 106 and one or more strength members 108. Each of the one or more tubes 104 encloses at least one optical fiber 102. In an aspect of the present disclosure, the optical fiber cable 100 includes a first layer 110. In general, an optical fiber cable includes a plurality of fibers and carries information in the form of data between two places using light technology. The optical fiber cable 100 is a cable used for carrying light over long distances. Furthermore, the optical fiber cable 100 may simply be used to transmit optical signals (which may carry sensor data or communication data).

In accordance with an embodiment of the present disclosure, at least one optical fiber 102 extends longitudinally along a length of the optical fiber cable 100. In an aspect, the optical fiber cable 100 includes a plurality of optical fibers. The at least one optical fiber 102 is a fiber used for transmitting information as light pulses from one end to another. In particular, at least one optical fiber 102 is a thin strand of glass or plastic capable of transmitting optical signals. Moreover, at least one optical fiber 102 is configured to transmit large amounts of information over long distances with relatively low attenuation.

In accordance with an embodiment of the present disclosure, the optical fiber 102 includes a core region and a cladding region. The core region is an inner part of an optical fiber and the cladding section is an outer part of the optical fiber. In particular, the core region is defined by a central longitudinal axis of each of the at least one optical fiber 102 and the cladding region surrounds the core region. Moreover, the core region and the cladding region are formed along the central longitudinal axis of at least one optical fiber 102. Further, the core region and the cladding region are formed during the manufacturing stage of at least one optical fiber 102. The core region has a refractive index which is greater than a refractive index of the cladding region.

In an aspect of the present disclosure, the one optical fiber 102 has a diameter of 200 ± 20 um. Alternatively, the diameter of the optical fiber 102 may vary.

In an aspect of the present disclosure, the one optical fiber 102 is a single mode fiber. Alternatively, optical fiber 102 is a multimode fiber.

In an aspect of the present disclosure, the at least one optical fiber 102 is at least one of loose fibers, flat ribbon, corrugated ribbon and Intermittently Bonded Ribbon. Alternatively, the at least one optical fiber 102 is a ribbon such that adjacent optical fibers in the ribbon are intermittently connected along length.

In accordance with an embodiment of the present disclosure, the optical fiber 102 is characterized by a macrobend loss. In particular, optical fibers experience additional propagation losses due to bending by coupling light from core modes (guided modes) to cladding modes when they are bent. Moreover, the macrobend loss occurs when the fibers in a cable are bent and subjected to a significant amount of bending above a critical value of curvature. Further, the at least one optical fiber 102 used in the one or more tubes 104 are insensitive to macrobend losses in order to obtain the optical fiber cable 100 with low optical attenuations.

In accordance with an embodiment of the present disclosure, the optical fiber 102 has the macrobend loss of less than or equal to 0.75 dB/turn at 1550 nm when the optical fiber 102 is bent around a mandrel of 10mm radius.

The optical fiber cable 100 includes one or more tubes 104. Each of the one or more tubes 104 encloses at least one optical fiber 102. In an exemplary example, each of the one or more tubes 104 encloses 12 optical fibers. Alternatively, one or more tubes 104 may enclose any number of optical fibers.

In an aspect of the present disclosure, the number of at least one optical fiber 102 in the optical fiber cable 100 is greater than equal to 72. Alternatively, the number of optical fiber 102 in the optical fiber cable 100 may vary.

In another aspect of the present disclosure, each of the one or more tubes 104 surrounds at least one optical fiber 102. In particular, the one or more tubes 104 covers optical fiber 102. Moreover, the one or more tubes 104 include one of loose tubes, buffer tubes, tight buffered tubes and the like. Further, each of the one or more tubes 104 is a tube for encapsulating the optical fiber 102 and provides support and protection to the optical fiber 102 against crush, bend and stretch. Furthermore, the one or more tubes 104 protect the optical fiber 102 and prevent ingression of water inside. Additionally, the one or more tubes 104 provide mechanical isolation, physical damage protection and identification of each of the at least one optical fiber 102. Alternatively, the one or more tubes 104 provide a single layer core construction.

The optical fiber cable 100 includes three tubes (as shown in FIG. 1) in accordance with one embodiment of the present disclosure. Alternatively in different embodiments, the optical fiber cable 100 includes eight tubes (as shown in FIG. 2). In particular, the one or more tubes 104 are stranded around each other. In an aspect, the stranding is S-Z stranding. Moreover, the one or more tubes 104 wound around each other in sections with a first direction of winding in an S-shape alternating with the sections with a second direction of winding in a Z-shape. Further, the first direction is a clockwise direction and the second direction is an anticlockwise direction. And, the SZ stranding of the one or more tubes 104 is performed in order to maintain a uniform lay length, mid-spanning and achieve higher production speeds as compared to helical stranding.

Additionally, the S-Z stranding allows uniform distribution of the stress across the one or more tubes 104. And, the S-Z stranding may have any number of turns between the S-shape and the Z-shape.

In accordance with an embodiment of the present disclosure, the one or more tubes 104 are characterized by a tube length and the optical fiber cable 100 is characterized by a cable length. At least one optical fiber 102 has a fiber length. In an aspect, the fiber length is 0 to 2% greater than the cable length.

The tube length of the one or more tubes 104 is greater than the cable length of the optical fiber cable 100. In one aspect, the tube length is 0 to 2% greater than the cable length. Alternatively, tube length may be different. The one or more tubes 104 are characterized by a young's modulus of less than or equal to 700 N. Alternatively, young's modulus may be different.

Further, the one or more tubes 104 are characterized by a lay length of equal to or more than 400 mm and low young's modulus. Alternatively, the one or more tubes 104 are stranded with high lay length because the one or more tubes 104 is made of a material with low young's modulus. The one or more tubes 104 may get physically damaged if the lay length is kept low.

The one or more tubes 104 may be characterized by an extra tube length (ETL). The extra tube length and extra fiber length is very low in the optical fiber cable 100 because of the high lay-length. In an aspect, the one or more tubes 104 have the extra tube length (ETL) between 0.02% to 0.2%. The extra tube length (ETL) = * 100.

The optical fiber cable 100 may not meet break load requirements if the young's modulus of the one or more tubes 104 is greater than 700 N. If the lay length of the one or more tubes 104 is less than 400 mm, then the one or more tubes 104 having the low young's modulus may face physical damage and inturn may affect optical fibers. This may induce optical losses in the optical fibers. If the extra tube length (ETL) is below 0.02 %, the optical fibers may experience mechanical stresses and may get damaged during handling of the optical fiber cable 100. If the extra tube length (ETL) is above 0.2 %, the lay length of the one or more tubes 104 has to be kept low which is not desired for the one or more tubes 104 with low young's modulus.

In accordance with an embodiment of the present disclosure, the one or more tubes 104 are made of easy peelable material. Alternatively, the one or more tubes 104 may be made of any other suitable material. The cross section of one or more tubes 104 is circular in shape. Alternatively, the cross section of the one or more tubes 104 may be of any suitable shape.

In an aspect of the present disclosure, the one or more tubes 104 have a uniform structure and dimensions. The one or more tubes 104 have a different thickness. Alternatively, the thickness of one or more tubes 104 is equal. In an aspect of the present disclosure, the thickness of one or more tubes 104 is in a range of about 0.1 - 0.25 millimeter. Alternatively, the thickness of the one or more tubes 104 may vary.

Furthermore, the one or more tubes 104 have an inner diameter and an outer diameter. In one aspect of the present disclosure, the inner diameter and the outer diameter of the one or more tubes 104 is fixed. The inner diameter of the one or more tubes 104 is in a range of about 0.9 - 1.35 millimeter. Alternatively, the inner diameter of the one or more tubes 104 may vary.

In an aspect of the present disclosure, the outer diameter of each of the one or more tubes 104 is in a range of about 1.1 - 1.5 millimeter. Alternatively, the outer diameter of the one or more tubes 104 may vary.

The optical fiber cable 100 includes the sheath 106 encapsulating one or more tubes 104. In an aspect, the sheath 106 encapsulates one or more layers surrounding the one or more tubes 104 (explained below).

In an aspect of the present disclosure, the sheath 106 is made of one of UV (Ultra Violet radiations) proof black medium density polyethylene material and UV proof black high density polyethylene material. Alternatively, the sheath 106 may be made of any other suitable material. In particular, the sheath 106 protects the optical fiber cable 100 from harsh environment and harmful UV rays. In addition, the sheath 106 has the inherent ability to resist crushes, kinks and tensile stress.

In an aspect of the present disclosure, the sheath 106 has a thickness in a range of about 1.2 - 1.8 millimeter. Alternatively, the sheath 106 may have any suitable thickness.

The optical fiber cable 100 includes one or more strength members 108 partially embedded in the sheath 106. In an aspect, the one or more strength members 108 is embedded substantially parallel to a longitudinal axis of the optical fiber cable 100. Alternatively, the one or more strength members 108 may not lie parallel to the longitudinal axis. In particular, the one or more strength members 108 provide tensile strength and stiffness to the optical fiber cable 100. Further, each of the one or more strength members 108 is stranded metallic wires. In an aspect, the stranded metallic wires are made of steel. In an aspect, the metallic wires are made of brass plated steel wires. Further, the one or more strength members 108 are characterized by a diameter. The one or more strength members 108 have a diameter in a range of about 0.3 - 0.8 mm. Alternatively, the diameter of the one or more strength members 108 may vary. The number of metallic wires in the one or more strength members 108 are 3. Alternatively, the number of metallic wires in the one or more strength members 108 may be more or less than 3. The number of the one or more strength members 108 is two and placed diagonally opposite. Alternatively, the number of the one or more strength members 108 may vary.

In accordance with an embodiment of the present disclosure, the optical fiber cable 100 includes one or more layers. The one or more layers include the first layer 110. The first layer 110 is made of binder yarns for binding a core of the optical fiber cable 100. In particular, the binder yarn is an aramid yarn or any suitable binder yarn. Further, one or more layers may include more layers such as but not limited to a water blocking tape layer, a water swellable yarn layer, fire retardant tape layer, binder tape layer and the like.

In an aspect, the optical fiber cable 100 includes a water blocking gel 112 filled inside the one or more tubes 104. In particular, the water blocking gel 112 is a thixotropic gel to prevent ingression of water inside each of the one or more tubes 104 and provide a cushioning to the optical fibers. The one or more tubes 104 may be loose tubes, buffer tubes and tight buffered tubes.

In accordance with an aspect of present disclosure, the optical fiber cable 100 may or may not include a ripcord. The ripcord is disposed inside the sheath 106 and lies substantially along the longitudinal axis of the optical fiber cable 100. In particular, the ripcord enables tearing of the sheath 106 to facilitate access to the one or more tubes 104. Further, the ripcord may be made of a polyester material or any other suitable material. The ripcord has a circular cross-section.

The optical fiber cable 100 may have a suitable diameter in a range of about 5-8 millimeters.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (100, 200) **characterized in that**:
one or more tubes (104), wherein each of the one or more tubes (104) encloses at least one optical fiber (102), wherein the at least one optical fiber (102) has a diameter of 200±20um;
a sheath (106) surrounding the one or more tubes (104); and
one or more strength members (108) embedded in the sheath (106), wherein the at least one optical fiber (102) has a macrobend loss of less than or equal to 0.75 dB/turn at 1550 nm when the at least one optical fiber (102) is bent around a mandrel of 10mm radius, wherein the optical fiber cable (100, 200) breaks at a pre-defined load.

2. The optical fiber cable (100, 200) as claimed in claim 1, wherein a number of at least one optical fiber (102) in the optical fiber cable (100, 200) is greater than or equal to 72.

3. The optical fiber cable (100, 200) as claimed in claim 1, wherein each of the one or more strength members (106) is stranded metallic wires.

4. The optical fiber cable (100, 200) as claimed in claim 1, wherein the one or more tubes (104) have a young's modulus of less than or equal to 700N.

5. The optical fiber cable (100, 200) as claimed in claim 1, wherein the one or more tubes (104) have a lay-length of equal to or more than 400 mm.

6. The optical fiber cable (100, 200) as claimed in claim 1, wherein the at least one optical fiber (102) has a fiber length, wherein the fiber length is 0 to 2% greater than a cable length of the optical fiber cable (100, 200).

7. The optical fiber cable (100, 200) as claimed in claim 1, wherein the at least one optical fiber (102) is a ribbon such that adjacent optical fibers in the ribbon are intermittently connected along length.
